Europäisches Patentamt

European Patent Office

Office européen des brevets

(11) Publication number: **0 058 270**
**A1**

## (12) EUROPEAN PATENT APPLICATION

(21) Application number: **81303747.0**

(22) Date of filing: **18.08.81**

(51) Int. Cl.³: **B 01 D 46/00**

(30) Priority: **09.02.81 US 232466**

(43) Date of publication of application:
**25.08.82 Bulletin 82/34**

(84) Designated Contracting States:
**DE GB SE**

(71) Applicant: **CAMBRIDGE FILTER CORP.**
**Henry Clay Boulevard**
**Syracuse New York(US)**

(72) Inventor: **Ellis, Jerry Robert**
**3331 So. Stevenson Court**
**Visalia California 93277(US)**

(72) Inventor: **Taddeo, John August**
**8286 Mantoua Drive**
**Clay New York 13041(US)**

(74) Representative: **Jackson, Peter Arthur et al,**
**GILL JENNINGS & EVERY 53 to 64, Chancery Lane**
**London WC2A 1HN(GB)**

(54) **Filter cartridge.**

(57) An annular filter cartridge (26) through which air passes radially as the air moves in a generally toroidal path within an enclosed housing (12) due to rotation of e.g. a computer tape disc (10), mounted adjacent to the cartridge within the housing. The cartridge includes a rigid annular body supporting an annular sheet (28) of filter material in a generally conical configuration within the annular body. The body portion is initially formed as two separate, mating parts (30,32) which clamp the sheet of filter material about its inner and outer peripheries when they are joined together.

./...

EP 0 058 270 A1

*Fig.1.*

*Fig.2.*

- 1 -

CAMBRIDGE FILTER CORP.                    GJE 5081/123

FILTER CARTRIDGE

The present invention relates to air filters and, more specifically, to filter cartridge constructions which may be used in fully enclosed portions of computers.

In many modern digital computers information is stored in magnetically coded form on a disc, and is retrieved or "read" from the disc for use in performing computer operations as the disc is rotated within an enclosed housing. In order to ensure long life and reliable operation of the discs it is necessary that they be protected from contamination by airborne particles. It is therefore desirable that such particles be substantially removed by filtration from the air in which the disc operates.

In accordance with the invention, a filter cartridge for filtering air within an enclosed housing, in which the air is caused to circulate in a generally toroidal path by rotation of structure within the housing, comprises a rigid body having mating parts initially formed as two separate parts; a first of the parts having a first, flat, annular portion and a first ring portion joined by a plurality of spaced first legs extending integrally between the outer periphery of the first annular portion and the first ring portion; a second of the parts having a second, flat, annular portion and a second ring portion joined by a plurality of spaced second legs extending integrally between the inner periphery of the second annular portion and the second ring portion; the first and second parts being so dimensioned that upon being placed together in mating relation, the first ring portion and the second annular portion present a first pair of essentially continuous, opposing surfaces, and the second ring portion and the first annular portion present a second pair of essentially continuous, opposing surfaces; an annular sheet of filter material engaged at its outer periphery between the first pair of opposing surfaces and at its inner periphery between the second pair of opposing surfaces; and means joining the first and second parts with the sheet of filter material continuously engaged therebetween at both its inner and outer peripheries, whereby air passing substantially radially through the cartridge when positioned in the toroidal air path passes through the filter material and between the legs of the first and second body parts.

Such a filter cartridge may be used to remove airborne contaminants from the air within a fully enclosed portion of a computer containing a rotating disc wherein air flow through the filter material is induced by rotation of the disc. The filter cartridge is suitable for mass production at relatively low cost, and is arranged for fast and simple mounting and removal in conjunction with a rotating information storage disc within an enclosed housing of a computer.

The sheet of filter material is most simply an annular blank cut from a planar sheet of the material. The inside diameter of the sheet of filter material may correspond approximately to the inside diameters of the two parts of the body, and the outside diameter of the filter material be slightly larger than that of the body so that when the two body parts are placed in mating engagement with the filter material in a conical configuration (i.e. extending diagonally between the inner and outer peripheries of the body) the inside and outside diameters of the filter material and body are approximately the same. The inner and outer peripheral portions of the filter material are firmly clamped or otherwise engaged between the ring of one body part and the opposing surface of the annular portion of the other body part, thereby holding the filter material in a substantially conical configuration. The inner and outer peripheries of the sheet of filter material may be held between the first and second pairs of opposing surfaces in substantially parallel planes.

The two parts of the body of the cartridge are, preferably permanently, joined by cementing, sonic welding, or other convenient means, with the sheet of filter material securely sealed therebetween. Air may flow radially through the cartridge by passing between the spaced legs at the inner and outer peripheries and through the filter material. Thus, if the outer, planar surfaces of the two annular portions are placed in sealed engagement with other structure, the only path for air flow is radially through the cartridge and filter material. The filter cartridge may be disposed within the housing of the computer with a separator plate contacting one side and the disc cartridge the other side. Air flow is induced by rapid rotation of the assembly within the housing in toroidal paths from radially outside to radially inside the filter cartridge and around the separator plate and disc cartridge back to the outside of the filter cartridge. Thus, contaminants are collected on the filter material and air within the housing is quickly purified after the housing has been opened to replace the disc and/or filter cartridge.

- 4 -

An example of a filter cartridge constructed in accordance with the invention is illustrated in the accompanying drawings, in which:-

Figure 1 is an axial section showing the filter cartridge installed in a computer disc housing;

Figure 2 is a side elevation of the filter cartridge;

Figure 3 is an exploded perspective view of the cartridge; and,

Figure 4 is an enlarged section taken on the line 4-4 of Figure 3.

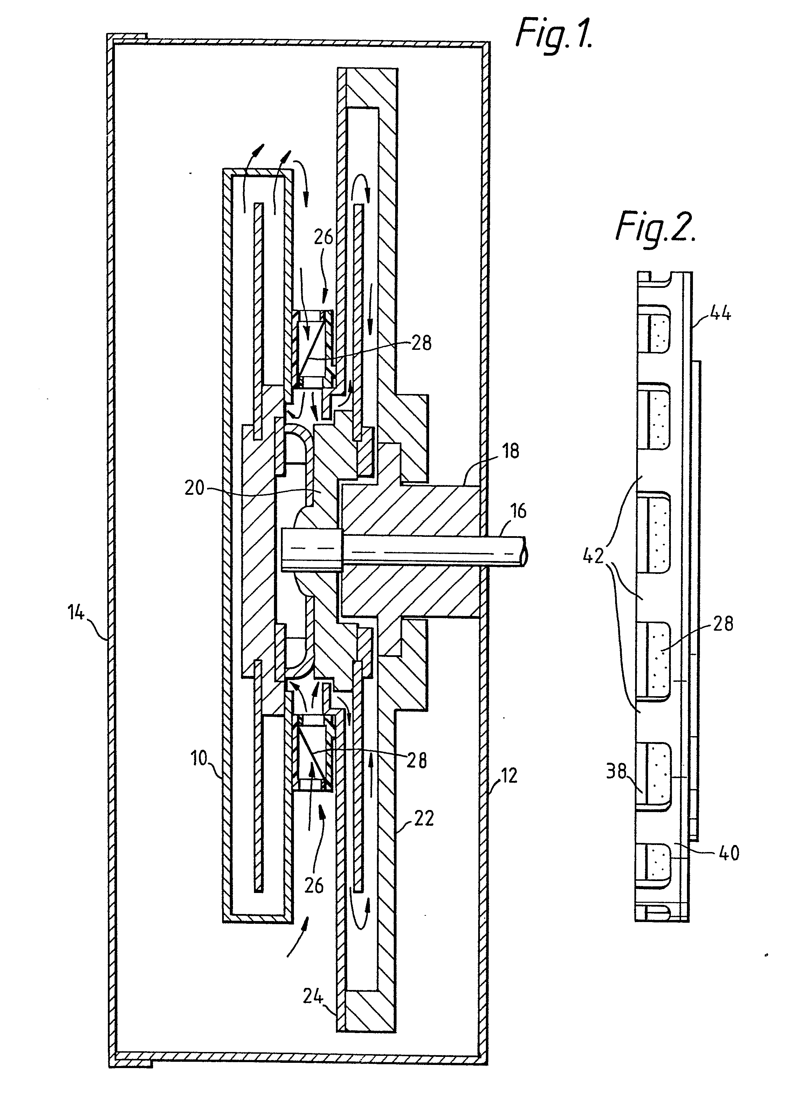

Figure 1 shows, somewhat diagrammatically, a circular disc cartridge 10, of a type typically used for the storage and retrieval of information in computer systems, mounted in its operating position within a housing 12 which is fully enclosed, having a movable side or door 14 for removal and replacement of the discs. A spindle 16 extends in sealed relation through one side of the housing 12 and carries a hub assembly 18 within the housing. The disc 10 is mounted upon the hub assembly 18 by means of suitable cooperative mounting means 20 for rotation within the housing 12 as the spindle 16 is rotated by appropriate power means (not shown) exteriorly of the housing. A base plate 22 and a separator plate 24 are also carried upon and rotated with hub assembly 18. The air filter cartridge is designated generally in Figure 1 by reference numeral 26 and is mounted within the housing 12 between the disc 10 and the separator plate 24. When the door 14 is closed, the interior of the housing 12 is effectively sealed and there is no passage of air between the inside and outside of the housing although the air within the housing is circulated about a toroidal path indicated by the arrows therein as the elements are rapidly rotated. It will be understood that the present invention is concerned solely with the air filter cartridge, the other elements being shown to provide a clearer understanding of the operation of the filter cartridge in its intended application.

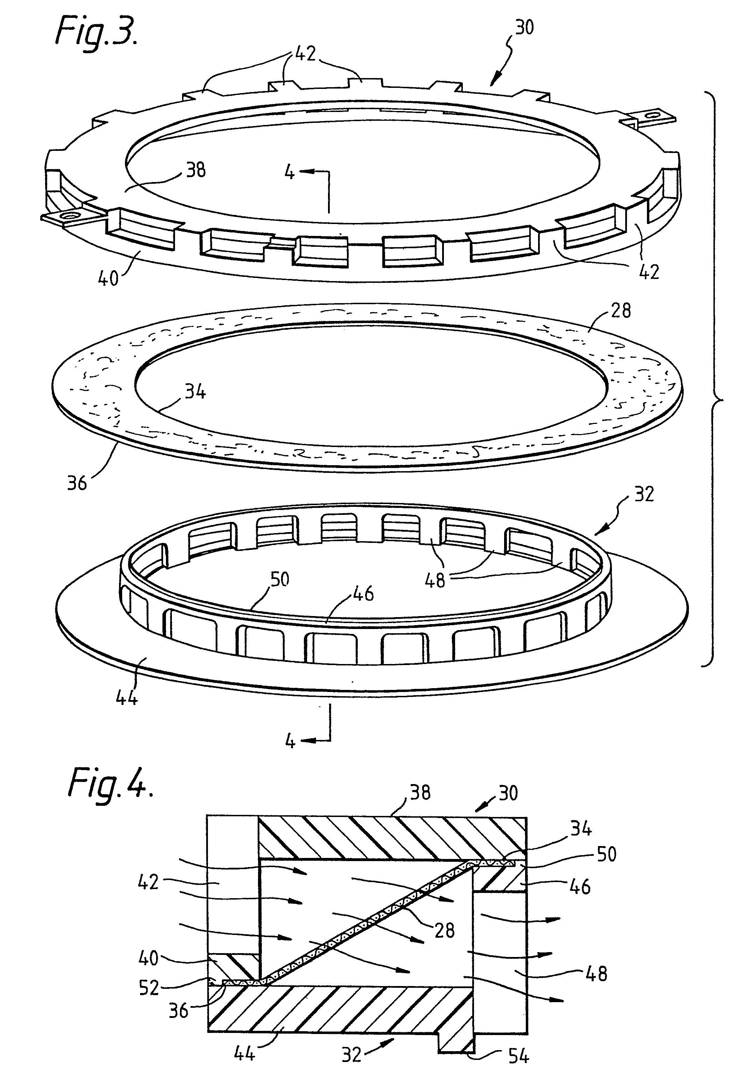

The filter cartridge 26 includes a single sheet of filter material 28 supported by a body formed as two mating parts 30 and 32. The sheet is initially flat and annular in form, having an open centre and inner and outer peripheral portions 34 and 36, respectively. The upper part 30 (as seen in Figure 3) of the body is preferably formed as a single piece of moulded plastics material and includes a flat, annular portion 38 and a ring portion 40 of essentially square cross section joined by a plurality of spaced legs 42 extending integrally between the outer periphery of the annular portion 38 and the upper surface of the ring portion 40. The part 32 likewise includes flat, annular portion 44, and a ring portion 46 with spaced legs 48 extending between and joining the inner periphery of the annular portion 44 and the ring portion 46.

The parts 30 and 32 are so dimensioned that the inside diameters of the annular portion 38 and of the ring portion 40 are equal. Thus, the two parts may be brought together with the upper surface of the ring portion 46 opposing the inner periphery of the lower surface of the annular portion 38, and the lower surface of the ring portion 40 opposing the outer periphery of the upper surface of the annular portion 44. The filter material 28 is cut with an inner diameter substantially equal to, and an outer diameter slightly greater than, corresponding diameters of the two body parts so that the inner and outer diameters of the filter material and body are substantially equal after assembly. The cartridge is assembled by placing the initially flat sheet of filter material between the two body parts and bringing the two together in mating relation, thus engaging the outer peripheral portions of the filter material between the ring portion 40 and the annular portion 44, and the inner peripheral portion of the filter material between the ring portion 46 and the annular portion 38, as seen in Figure 4. The filter material 28, except for the engaged peripheral portions, is thus held in a generally conical configuration.

After the elements have been assembled in the manner indicated in cross section in Figure 4, they are permanently retained in such relationship by conventional means such as adhesive or sonic welding of the mated plastics parts. For the latter purpose, a slightly raised shoulder 50 may be provided on the surface of the ring portion 46 which opposes the annular portion 38 in the area where the two parts are to be sonically welded. A raised should 52 is provided on the ring portion 40 for the same purpose. A locating ring 54, mounting tabs 56 and a notch 58 in one of legs 42 are provided in order to assist in mounting the filter cartridge 26 upon the elements associated with the rotating disc cartridge 10 and to provide necessary clearances.

- 7 -

CLAIMS

1.   A filter cartridge (26) for filtering air within an enclosed housing (12) in which the air is caused to circulate in a generally toroidal path by rotation of structure within the housing, characterised in that the cartridge comprises a rigid body having mating parts (30,32) initially formed as two separate parts; a first (30) of the parts having a first, flat, annular portion (38) and a first ring portion (40) joined by a plurality of spaced first legs (42) extending integrally between the outer periphery of the first annular portion and the first ring portion; a second (32) of the parts having a second, flat, annular portion (44) and a second ring portion (46) joined by a plurality of spaced second legs (48) extending integrally between the inner periphery of the second annular portion and the second ring portion; the the first and second parts being so dimensioned that upon being placed together in mating relation, the first ring portion and the second annular portion present a first pair of essentially continuous, opposing surfaces, and the second ring portion and the first annular portion present a second pair of essentially continuous, opposing surfaces; an annular sheet of filter material (28) engaged at its outer periphery (36) between the first pair of opposing surfaces and at its inner periphery (34) between the second pair of opposing surfaces; and means (50) joining the first and second parts with the sheet of filter material continuously engaged therebetween at both its inner and outer peripheries, whereby air passing substantially radially through the cartridge when positioned in the toroidal air path passes through the filter material and between the legs of the first and second body parts.

2.    A cartridge according to claim 1 wherein the sheet of filter material is an annular blank cut from a planar sheet of the material.

3.    A cartridge according to claim 1 or claim 2, wherein the inner and outer peripheries of the sheet of filter material are engaged between the first and second pairs of opposing surfaces to hold the portion of the material between the engaged peripheries in a substantially conical configuration.

4.    A cartridge according to any one of the preceding claims, wherein the inner and outer peripheries of the sheet of filter material are held between the first and second pairs of opposing surfaces in substantially parallel planes.

*Fig.1.*

*Fig.2.*

*Fig.3.*

42

30

38

4

40

42

28

34

36

32

50

46

48

44

4

*Fig.4.*

38

30

34

50

46

42

28

40

48

52

36

44

32

54

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 800 510 (L.T.LAMOND) | | B 01 D 46/00 |
| | --- | | |
| A | FR-A-2 418 664 (CARL SCHLEICHER & SCHULL) | | |
| | ----- | | |

**TECHNICAL FIELDS SEARCHED (Int. Cl. 3)**

B 01 D 46/00
F 02 M 35/00

The present search report has been drawn up for all claims

| Place of search THE HAGUE | Date of completion of the search 04-06-1982 | Examiner BOGAERTS M.L.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82